Europäisches Patentamt

European Patent Office

Office européen des brevets

(19)

(11) Publication number: 0 061 185
A2

(12) EUROPEAN PATENT APPLICATION

(21) Application number: 82102327.2

(22) Date of filing: 20.03.82

(51) Int. Cl.³: B 26 D 3/10
B 29 C 17/10

(30) Priority: 25.03.81 US 247555

(43) Date of publication of application:
29.09.82 Bulletin 82/39

(84) Designated Contracting States:
AT BE CH DE FR GB IT LI NL SE

(71) Applicant: HARDIGG INDUSTRIES, INCORPORATED

South Deerfield Massachusetts 01373(US)

(72) Inventor: Turner, Edward Wayne
Routes 5'10
Deerfield Massachusetts 01342(US)

(72) Inventor: Blake, Peter J.
Box X53
Bondsville Massachusetts 01109(US)

(72) Inventor: Strzegowski, Joseph Chester, Jr.
Reeds Bridge Road
Conway, Massachusetts 01341(US)

(74) Representative: Knowles, Audrey Elizabeth
624 Pershore Road
Selly Park Birmingham B29 7HG(GB)

(54) Apparatus for trimming and sizing plastic blanks for containers.

(57) The invention concerns apparatus for trimming and sizing plastic blanks for containers, particularly for cutting the side walls of half-jar molded blanks to predetermined, dimensional requirements so that such blanks will be properly sized for subsequent welding to form containers. The apparatus is comprised of a support (14) for holding a blank (50) and an adjustable cutter assembly (16) adapted to move along the support (14) to cut the side walls (52, 54) of the blank (50) along desired lines in a synchronized manner. The cutter assembly (16) includes two cutting units (90, 92) one for each side wall (52, 54). Each cutting unit (90, 92) is similar and includes at least two knives (104, 106) that track on the same cut line with the leading knife (104) cutting only partially through the side wall (52) of the blank (50) while the following knife (106) completes the cut. The apparatus includes an end cutting assembly (18) with a cutting unit (150) having two knives. The apparatus also includes means (24) for loading and unloading blanks and a waste ejection assembly (22) for removing the cut portions.

EP 0 061 185 A2

./...

FIG. 1

Title:  APPARATUS FOR TRIMMING AND SIZING
PLASTIC BLANKS FOR CONTAINERS

The apparatus which comprises the present invention is primarily designed for use with plastic containers, such as those molded by injection molding procedures from polypropylene. While a variety of container types could be formed, this invention is primarily concerned with sizing half-jar molded blanks two of which will be subsequently welded together to form a completed jar or container. Battery jars can be formed in this manner, and in their construction, it is important that the battery jar be sized to hold exactly the number of plates desired for the cell and since the number of plates will vary from cell size to cell size, it is easier to mold half jar blanks with a longer side wall than is necessary for the greatest dimension needed and to thereafter trim each blank to the desired size.

While the present invention will deal primarily with the construction of battery jars and the trimming of blanks therefor, it should be understood that this invention can be used to trim a variety of containers to finished dimensions. In addition, it should also be understood that such containers can be made out of a variety of materials, the only necessity being that the container be constructed from a material that is severable by slicing techniques.

It is known, in the battery art, that battery jar blanks can be trimmed following molding through the use of saw type cutters. The problem with such procedures, however, is that the resulting finished edge can very likely be jagged or rough which does not lend itself to being welded to a similar edge. Also, a great deal of waste material, in the form of dust and chips, is created and the atmosphere around such sawing devices becomes contaminated with that dust. Additionally, the sawing operation creates a good deal of noise which increases the overall noise level within a plant environment. Together, these problems make working conditions somewhat less desirable than they might otherwise be without the use of saw type cutters.

Because many chips are being produced by such saw blades, it is also sometimes necessary to clean or otherwise treat the cut edge of the blank prior to welding which adds additional labor costs to the manufacturing process. Further, as saw blades become dull with use, it is difficult to maintain the accuracy of cuts and the process is also energy inefficient because of the power required not only to make the cut but the thousands of chips produced thereby.

The present invention makes it possible to cut or trim molded halves of battery jars or blanks to their proper dimensions through the use of knives or razor blades quietly, economically and relatively noiselessly. The particular processing of the blanks produces extremely straight cuts, and eliminates jagged edges along the cut line, and the cutting stroke is quiet and more energy efficient since there is no cutting away of the container side wall in the same manner in which a saw blade would make its cut. Further, the cutting stroke does not create dust in the plant's atmosphere and does not result in the formation of waste in the form of cut chips as with saw blades.

The apparatus employs a unique cutter design in which a block has two machined slots, each for receiving a cutting blade therein, preferably a segmented cutting blade. The blades, after being placed in the such slots, are held fixed in place by a cover plate. Each blade lies in the same horizontal plane and it is preferred to employ two cutting blades or knives. The first blade extends away from its mounting block on the side adjacent the blank a predetermined distance such that during the cutting stroke, it will cut only a portion of the way through the side wall thickness of the blank. The second knife will extend outwardly from that same holder a further distance and because it is in the same horizontal plane as the first blade, it will track through the cut line created by the first blade and because it extends a further distance out from the holder, it will complete the cut through the side wall thickness of the jar or container.

Because the first blade is set to only cut a portion of the way through the container's side wall, the sideways deflecting forces on the blade are equal. Accordingly, the line cut by that blade can be very straight. Because the second blade is passing through that cut line, it is, in effect, being guided thereby and also tends to produce a very straight secondary cut. While this second blade is set to completely sever through the side wall it still is cutting through a thickness substantially less than the thickness of the whole sidewall.

The apparatus also employs means for loading uncut blanks, for unloading cut blanks, means to securely clamp the uncut blank in place during cutting and control means to correctly control the automatic sequence of operations.

Although single razor blade slitting of thin films is known and practiced in the web handling art, cutting thick plastic moldings or extrusions, in the range of 0.030-0.300 inches, with razor blades has not been successful because of blade wander and breakage. The present invention overcomes these difficulties as described previously and in the following description of the preferred embodiment.

Other objects, features, and characteristics of the present invention as well as the methods and operation and functions of the related elements of the structure, and to the combination of parts and economies of manufacture, will become more apparent upon consideration of the following description and the appended claims with reference to the accompaying drawings, all of which form a part of this specification, wherein like reference numerals designate corresponding parts in the various figures.

FIGURE 1 is a diagrammatic, side elevational view of the preferred exemplary embodiment of the present invention with parts broken away for clarity;

FIGURE 2 is a diagrammatic, top plan view of the apparatus shown in Figure 1 with parts again broken away for clarity;

FIGURE 3 is a diagrammatic end view of the apparatus shown in Figure 1 with parts broken away for clarity;

FIGURE 4 is a perspective view of the cutter unit;

FIGURE 5 is a perspective view of an uncut blank showing the trim line in phantom; and

FIGURE 6 shows the flow diagram for the operation of the apparatus.

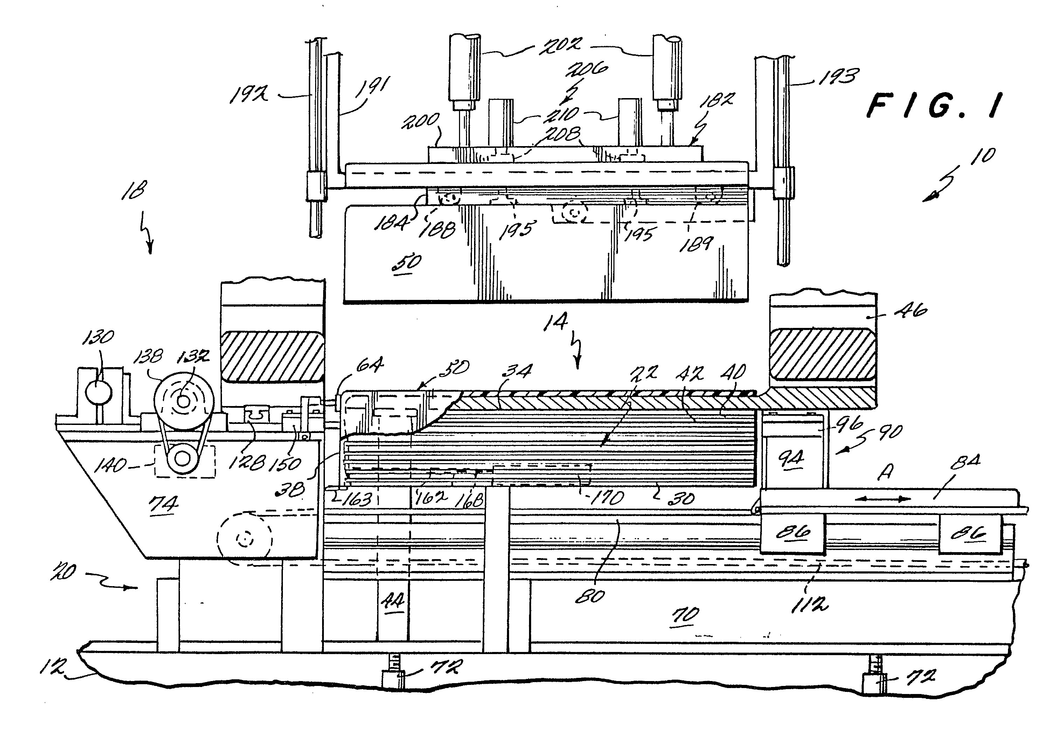

Turning our attention first to Figures 1-3, the present invention, generally indicated at 10, is comprised of main frame 12 to which a plurality of sub-assemblies are connected. These sub-assemblies include a support assembly, generally indicated at 14, a side cutting assembly 16, an end cutting assembly 18, a cutting height adjusting assembly 20, a waste ejection assembly 22, loading and unloading assemblies, generally indicated at 24, and a programmable controller, generally indicated at 26.

The container support assembly 14 is comprised of a support tongue 30, comprised of a top wall 32, side walls 34 and 36, and a bottom or end wall 38. These four walls are held together by an internal frame work (not shown) in any convenient fashion so that a box structure having at least a top wall, two side walls and an end wall is formed thereby. Preferably, these walls are comprised of polypropylene sheets that are grooved as indicated at 40 so that the cutting knives as will be described later, will be able to pass through these grooves while cutting the container with ribs 42 acting together to define a support surface for the inside of the blank. It is necessary only that side walls 34 and 36 and end wall 38 be provided with this groove and rib structure, since it is contemplated with this particular embodiment to cut only the bottom and side walls of each blank. However, it should be understood that each of the walls along which cutting is to be done could be provided with this groove and rib structure.

As shown in Figure 1, tongue 30 is supported at one end by column 44 which extends downwardly away from tongue 30, at the end toward end cutting assembly 18, to main frame 12. The opposite end of tongue 30 is supported from the top by column 46 which extends upwardly away from tongue 30 to the top portion of main frame 12. By supporting tongue 30 in this fashion, the area beneath the major length of tongue 30 is free of any support devices. As will become clear hereinafter, this allows the side cutting assembly 16 to move thereunder.

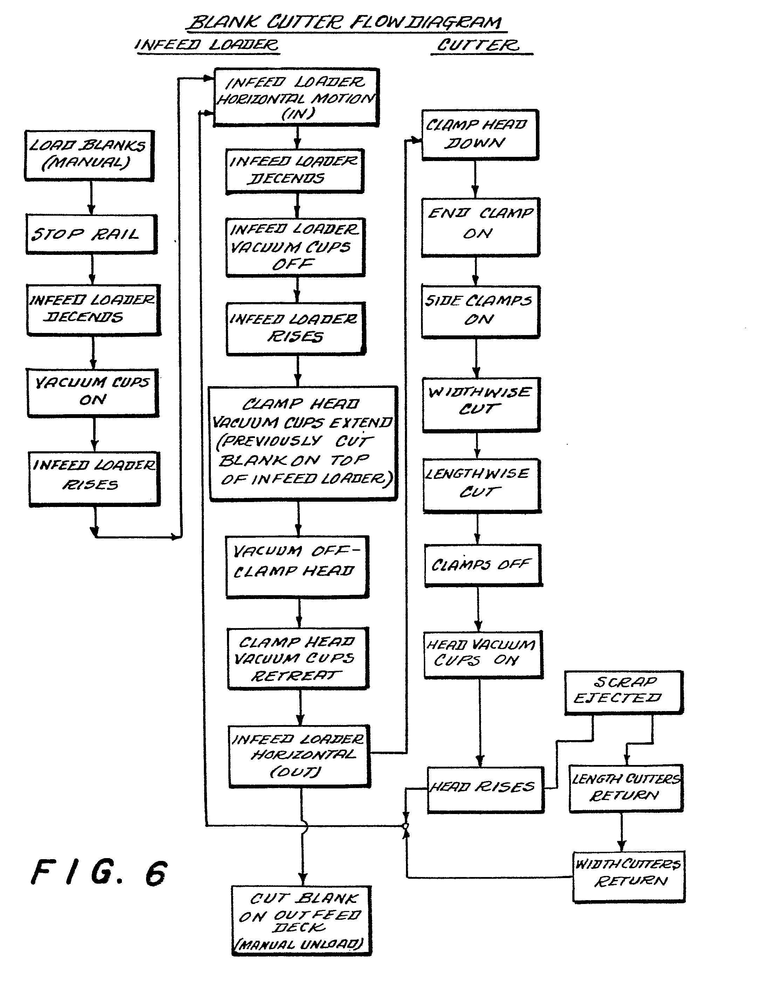

As shown in Figure 5, an uncut container or blank 50 is comprised of side walls 52 and 54, an end wall 56 and a top wall 58. This blank has a shape somewhat similar to that of tongue 30 and indeed, when blank 50 is placed on tongue 30, side walls 52 and 54 will straddle tongue side walls 34 and 36 of the tongue, end wall 56 will be adjacent tongue end wall 38 and top wall 58 will be adjacent tongue top wall 32. Also the proposed cut line is shown in phantom.

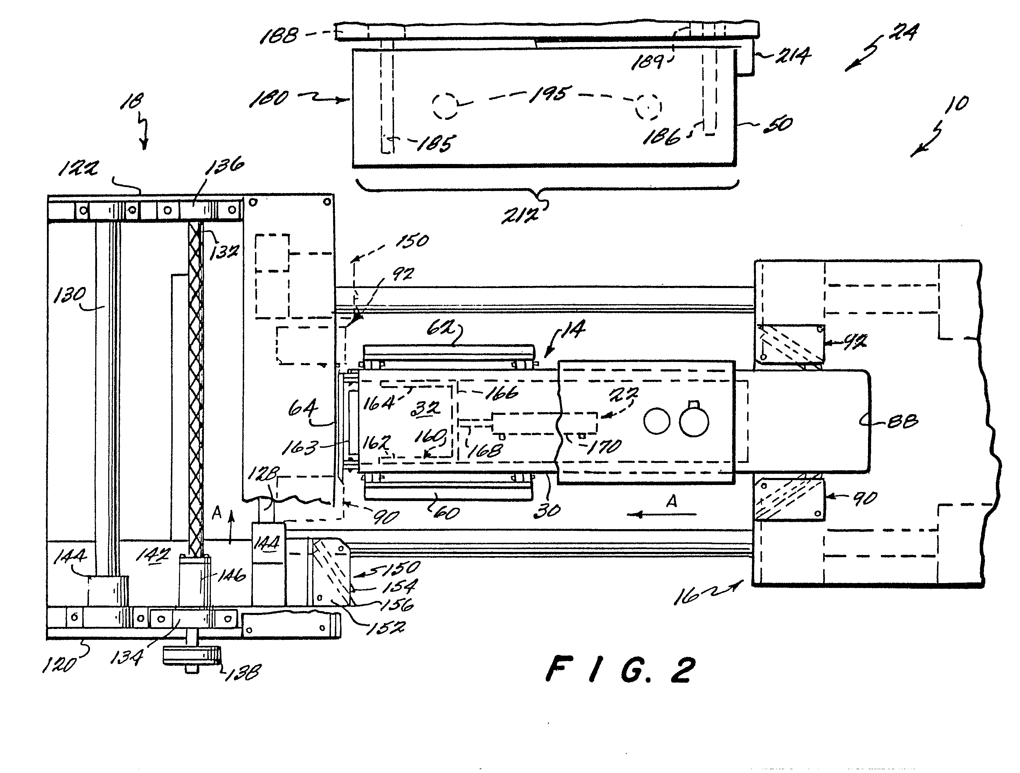

Side clamps 60 and 62, extend around the side cutting assembly 16 as shown in Figure 2, and are attached to the bottom table and will be activated just prior to cutting in order to hold side walls 52 and 54 just above the cutting line firmly in position over tongue side walls 34 and 36. An end clamp 64 will perform a like function with respect to end wall 56 of the container 50 adjacent end wall 38 of the support tongue.

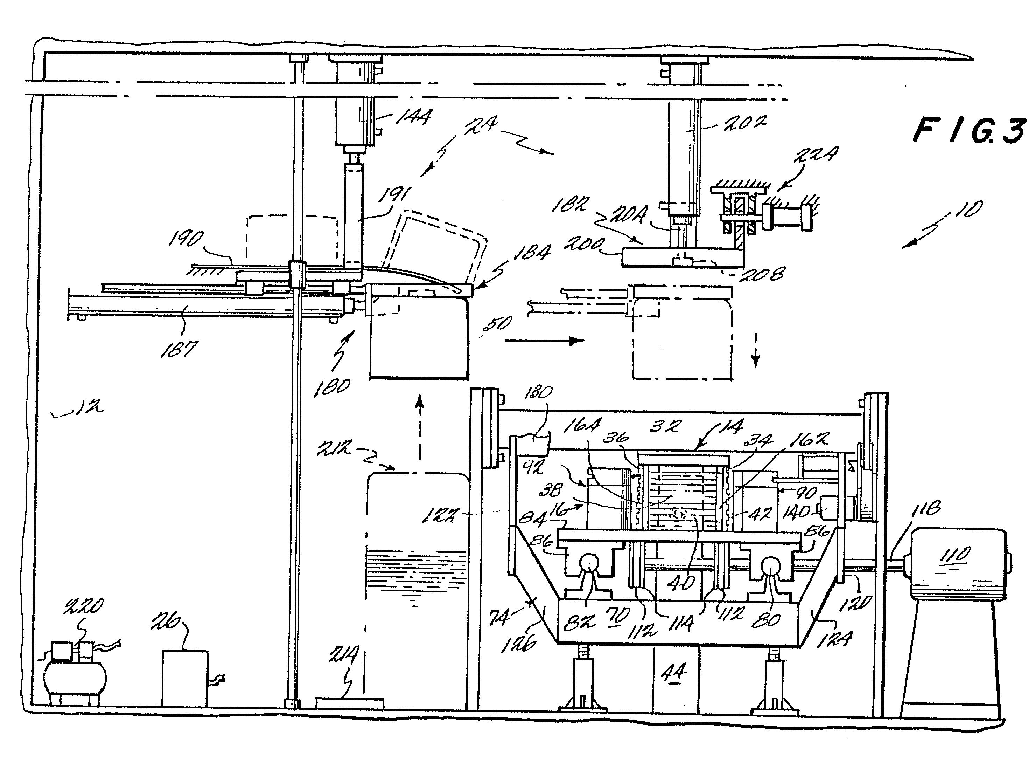

With reference to Figures 1 and 3, the height cutting adjustment assembly 20 is comprised primarily of a lower frame or table 70 adjustably supported on main frame 12 by means of a plurality of screw jacks 72. Table 70 extends beneath tongue 30 and one portion of it extends outwardly past the end of tongue 30 adjacent column 44. Supported on that portion of table 70 which extends past that end of tongue 30, is an end frame 74 on which the end cutting assembly 18 is mounted; that end frame will be more fully described hereinafter.

Side cutting assembly 16 is supported on two rails 80 and 82 shown in Figures 1 and 3 and an upper support table or frame 84 is slidably connected to rails 80 and 82 by means of a plurality of slide bearings 86 mounted on each side of table 84.

As shown in Figure 2, the front or lead end of table 84 that will move toward column 44 is provided with a knotched or slotted area 88 along its leading edge. Slot 88 is sized so as to be slightly larger than the width of column 44 and as side cutting assembly 16 moves along beneath tongue 30, table 84 will be able to pass around column 44.

Cutting units 90 and 92 are mounted to table 84 adjacent that front or leading edge and on each side of slot 88. Thus, as table 84 moves past column 44, slot 88 will allow cutting units 90 and 92 to pass beyond end wall 38 of tongue 30 to assure full and complete cutting of the entire length of the side walls 52 and 54 of the blank.

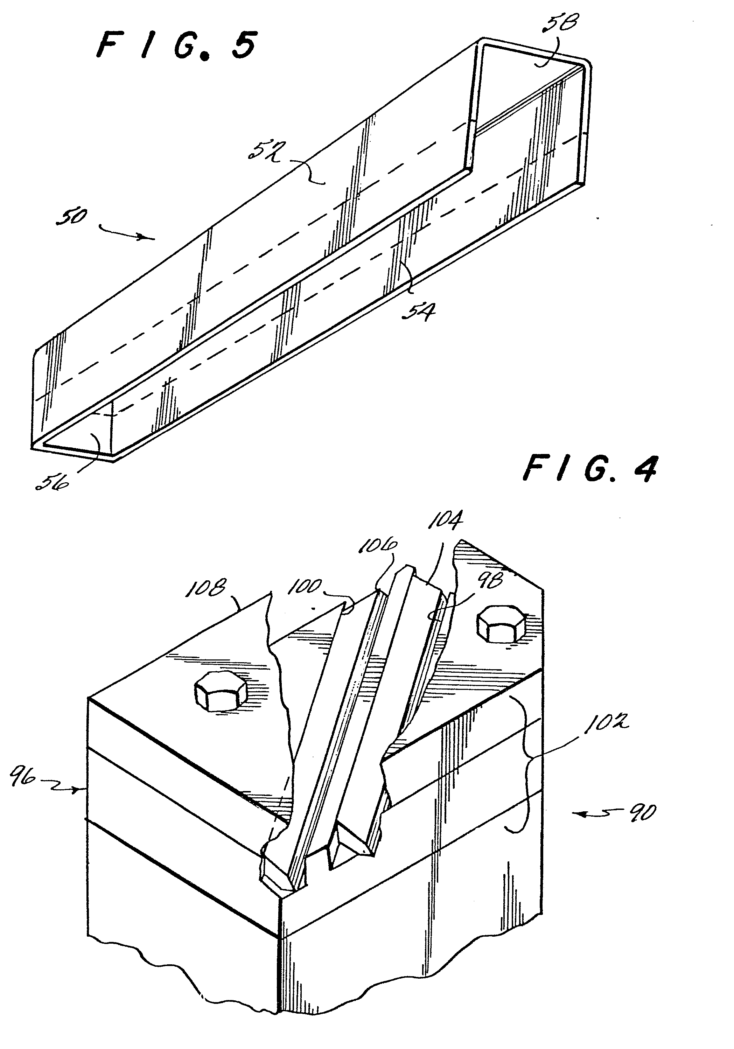

A more detailed view of cutting unit 90 is shown in Figure 4 and cutting unit 92 is formed in a similar way. With reference specifically to Figure 4, each cutting unit is comprised of a support base 94 which is secured by any convenient means to upper table 84 as for example, by screws (not shown). Secured to support base 94 is a support block 96 which is provided with two milled slots 98 and 100 that are angled with respect to the front face 102 of the cutting unit. It should be under stood also that front face 102 is that face of each cutting unit which is positioned closest to side walls 52 and 54 of blank 50.

Each of the milled slots 98 and 100 receives a knife blade, 104 and 106 respectively, which are held within slots 98 and 100 by top plate 108. It will be noticed from Figure 2 that cutting units 90 and 92 are moved in a cutting stroke in the direction indicated by arrow A.

Knife blades 104 and 106 are positioned on support block 96, and slots 98 and 100 are milled so that both blades lie in the same plane. Lead knife 104 extends outwardly from front face 102 a first predetermined distance that will enable it to cut only a partial way through the side wall during the cutting stroke. Preferably, where the side wall of the blank, which can vary from about 0.030 to about 0.300 inches, is about 0.100 inches thick, knife 104 will make a cut ranging from about 0.020 to about 0.040 inches although variations from that could be allowed. The following or trailing knife 106 extends outwardly from face 102 a second predetermined distance, that will enable it to complete the cut through the wall. Thus, in the above example, the trailing blade would extend at least 0.060 inches and preferably about 0.100 inches beyond the first blade. It should be understood, however, that because the first blade only cuts a shallow groove and preferably has an edge that is sharpened from each side, it experiences equal forces from each side and, therefore, travels in a straight line. The second blade does not experience equal side forces as the scrap piece can move away, while the rest of the trimmed blank is clamped in position on the tongue. However, the cut line formed by the first blade, together with the angle of the second blade, result in guiding forces on the second blade which are much larger than the unbalanced forces. The second blade is, therefore, constrained to follow the straight line produced by the first blade. Thus, the apparatus can use a razor blade to cut relatively thick plastic material without wander or breakage.

End cutting assembly 18 is supported in support frame 74 which, as indicated previously, is connected to lower table 70. Support frame 74 is primarily comprised of two vertical wall members 120 and 122 and angle support brackets 124 and 126 which connect to table 70. Extending across vertical members 120 and 122 is a front guide rail 128 and a rear guide rail 130. In addition, a double helix cam drive shaft 132 is supported in bearings 134 and 136 while its outer drive end is connected to drive pulley 138, which in turn is connected by suitable drive means to motor 140. A drive carriage, generally indicated at 142, is supported by the front and rear guide rails 128 and 130 by suitable slide bearings, such as indicated at 144, and a drive coupling 146 depends from carriage 142 so as to drivingly engage the double helix cam drive shaft 132. Thus, as drive shaft 132 is rotated by motor 140, carriage 142 will traverse back and forth between vertical wall members 120 and 122.

Attached to the front of carriage 142 adjacent end 38 of tongue 30 is a cutting unit, generally indicated at 150, which is constructed in a manner similar to cutting unit 90 as shown in Figure 4. As shown in Figure 2, cutting unit 150 includes a top holding plate 152 which secures cutting knives 154 and 156 in their correct position. Here again, it should be understood that the lead knife 154 extends away from the front face 155 of cutting unit 150 a lesser distance than does the second knife 156. Thus, as carriage 142 moves across the end of tongue 30, knives 154 and 156 will engage end wall 56 of the uncut blank with knife 154 cutting part way through the end wall's thickness. Knife 156 follows along the cut line made by knife 154 and completes the cut through the end wall's thickness.

As will be appreciated it is necessary to have the sequence of cutting units 90, 92 and 150 work together in a synchronized manner, while the respective drives can be actuated at the same time, end cutting unit 150 has a smaller surface to traverse and will complete its cut arriving at its end of cut position, as shown in phantom in Figure 2 first. Cutting unit 150 will be held at that point to allow cutting units 90 and 92 to complete their traverse of the sidewalls. That position is also indicated in phantom in Figure 2. Following ejection of the waste portion that has at this point been cut away (that portion below the cut line shown in Figure 5) and the lifting of the trimmed blank away from tongue 30, each of the cutters 90, 92 and 150 will be returned to their initial start positions, as shown in full line in Figure 2.

While the drive unit for the side cutting assembly 16 can be any of a variety of types, including long stroke drive cylinders, one way to accomplish the movement of cutters 90 and 92 is by means of hydraulic motor 110 which in turn drives a pair of drive belts 112 arranged about a pair of front pulleys 114 located beneath end cutting assembly 18 and a rear pair of pulleys (not shown) arranged so as to be axially aligned with and carried by drive shaft 118 of motor 110 secured to bottom table 70 and located at a convenient point at the rear of tongue 30. Pulleys 114 are mounted on a shaft rotatably mounted on brackets (not shown) which are secured to table 70 so that pulleys 114 are inboard of rails 80 and 82. Drive belts 112 extend around their respective front and rear pulleys and each is connected to the bottom of upper support table 84. Accordingly, when motor 110 is driven in a foward mode, table 84 will be moved in the direction indicated by arrow A. By reversing the drive direction of motor 110, upper table 84 will be moved rearwardly back to its initial starting position shown in Figure 2.

Looking first at Figures 1 and 2, the waste or scrap ejection assembly 22 for ejecting the waste portion below the cut line operates internally within tongue 30 and is comprised of a U-shaped ejector having ejection legs 162 and 164 which are connected together by a rear connecting link 166. Ejector legs 162 and 164 preferably operate in a suitable slide or track. Plate 163 is mounted at the ends of ejector legs 162 and 164 at the bottom and extends beyond end 38 to receive the waste portion of the bottom wall when it falls following completion of the cutting strokes. Plate 163 is, accordingly, positioned lower than the longest side or end wall will reach. As shown in Figure 3, ejector legs 162 and 164 are dimensioned so that they can slide through an opening that has been left between each side plate 34 and 36 and end plate 38. A drive cylinder 170 suitably supported within tongue 30 is connected to connecting link 166 through its drive shaft 168 and during the ejection stroke, cylinder 170 will be actuated forcing the U-shaped ejector forward so that legs 162 and 164 extend beyond end wall 38 of tongue 30. The stroke of cylinder 170 is preferably quick so that following cutting and after the scrap piece has dropped with the bottom section resting on the extension of plate 163 forward of column 44 and the side portions resting on upper table 84, the scrap portion below the cut line will be ejected out of the machine beneath end cutting assembly 18.

Turning now to Figures 1 and 3, the loading and unloading assembly 24 is comprised of an infeed loader, generally indicated at 180, and a clamp head generally indicated at 182. Turning first to the infeed loader, its function is to receive and pick up an uncut blank from a conveyor or a loading point where an uncut blank has been positioned, and to move that uncut blank directly over tongue 30 and lower it into position thereon. Infeed loader 180 is comprised of a vacuum pick-up assembly 184 which is horizontally movable on cantilever arms 185 and 186 which are driven by a drive cylinder 187. Arms 185 and 186 slide in bearings 188 and 189 mounted beneath the outfeed deck 190. Also secured to deck 190 is a vertical frame 191 which is slidably connected to vertical rails 192 and 193 secured to main frame 12. Frame 191 moves vertically under the vertical control of drive cylinder 194 mounted between the main frame 12 and vertical frame 191. Located within vacuum pick-up assembly 184 is a vacuum cup assembly shown in phantom at 195 which includes vacuum cups which move with assembly 184. This vacuum pick-up assembly 184 moves vertically up and down by moving with frame 191 by the action of drive cylinder 194.

Thus, the vacuum pick-up assembly depends upon vertical frame 191 and drive cylinder 194 for its vertical movement but moves horizontally independently of vertical frame 191. Its horizontal movement begins at a pick-up position, as shown in full line in Figure 3, and ends at a forward position, as shown in phantom. In this latter position, uncut blank 50 is directly over tongue 30 and when cylinder 194 is actuated, blank 50 will be lowered into place over tongue 30. When the vacuum securing uncut blank 50 to assembly 184 is released the uncut blank will remain in position on tongue 30. When assembly 184 is thereafter raised back to its "up" position, clamp head 182 will be able to deposit a cut blank, which it had previously removed from tongue 30 as it was raised, on top of assembly 184. While this will be described below, assembly 184 with a cut blank on its upper surface can be retracted to its start (full line) position. When it arrives at that point it will be stopped suddenly and the cut blank will slide through the opening within vertical frame 191 and onto the outfeed or unloading deck 190 from which it can be manually removed.

Turning now to clamp head 182, it is comprised of an outer frame 200, which is vertically movable within the main frame 12 by being connected to cylinders 202 via drive shafts 204; cylinders 202 are connected to an upper portion of main frame 12. Located within frame 200 is another vacuum pickup assembly 206 which includes vertically movable vacuum cups 208 connected to drive cylinders 210.

Thus, at the beginning of operation, an uncut blank is suitably positioned in a pickup area outboard of the machine and generally shown at 212. Vacuum pick-up assembly 180 is lowered until cup assembly 195 comes into engagement with the upper surface of blank 50 and vacuum is applied. The cylinder rod of cylinder 194 will be retracted and vertical frame 191 together with vacuum pick-up assembly 184 will be lifted to an "up" position. Thereafter, frame 184 will be moved by cylinder 187 into a position immediately overlying tongue 30. At that point, cylinder 194 will lower assembly 184 thereby lowering blank 50 on tongue 30 and when vacuum is released blank 50 will rest on tongue 30. If this is the first blank coming into the machine, no blank will have been previously unloaded. Assembly 184 will then be retracted to its outboard position ready to pick up another blank. Clamp head 182 will be lowered so that frame 200 engages the top of wall 58 thereby placing vertical pressure on the uncut blank. Thereafter, side clamps 60 and 62 as well as end clamp 64 will be actuated. End cutting assembly 18 will complete its cut first and will be held in its "end of cut" position while side cutting assembly 16 completes its cut. At that point cutting units 90 and 92 will lie approximately in the path of end cutting unit 152 as shown in phantom in Figure 2.

Thereafter side and end clamps 60, 62, and 64, respectively, will open and vacuum will be applied to vacuum cups 208 within frame 200 of clamping head 182. Thus, when clamping head 182 is raised by cylinders 202, it will lift the cut portion of blank 50 upwardly off of tongue 30 and above the horizontal path of assembly 184. Following removal of the trimmed blank from the tongue, ejection cyclinder 170 will be actuated so that the scrap portion of the end and side walls will be ejected out of the machine beneath end cutting assembly 18. The cut blank will be held in that raised position and another blank will be fed between clamping head 182 and tongue 30 and lowered into position as previously described. Following that vacuum cups 208 will be lowered thereby lowering the cut portion of the container, that had been held by clamp head 182, to the upper surface of assembly frame 184. When the cut portion is positioned thereon, vacuum will be removed from vacuum cups 208. Vacuum cups 208 will thereafter be retracted within frame 200 and assembly 184 will retract to its pickup position where the cut blank will be deposited on deck 190 and unloaded. This cycle will continue as long as uncut blanks are made available to the infeed assmebly 180.

Turning now to the control system reference can be given to Figure 6 which is a flow diagram covering the steps used to complete loading, unloading and cutting of the un-cut blanks. Initially, un-cut blanks can be manually placed against a stop, such as at 214 in Figures 2 and 3, which determines a loading position. While it is not shown in the present invention, uncut blanks could be fed to that point by means of a conveying or some other automated system. However, regardless of how it occurs, an uncut blank will arrive at its initial pickup position. The vacuum pick-up assembly 184 will descend and with vacuum applied to vacuum cups the blank will be secured and rise together with the vacuum pick-up assembly itself as it is raised to a position where it can be horizontally fed into the machine. The vacuum pick-up assembly is then moved horizontally so that the uncut blank is positioned over tongue 30 and assembly 184 will again descend so that the blank is placed on tongue 30 at which point vacuum is cut off. Assembly 184 will then rise and assuming that no blank had been cut previously, no cut blank will be held by the clamp head and assembly 184 will be retracted. Clamp head 182 can then descend to firmly clamp the uncut blank on tongue 30. Following actuation of the end and side clamps, the side and end wall cuts will be made. Following cutting, the side and end clamps will be opened releasing the cut portion. Vacuum will be applied to the vacuum cups in the clamp head so that the cut blank will be secured to it so that when clamp head 182 is raised the cut blank will be raised with it and removed from tongue 30. As the head is being raised, the scrap piece below the cut line will be ejected to clear the machine and both sets of cutters return to their initial position. At the same time, infeed loading can begin again to prepare another uncut blank for horizontal feeding into the apparatus. Thus, when clamp head 182 is in its fully raised position, having removed the cut blank from tongue 30 and raised it above the level of

**0061185**

infeed for the vacuum pick-up assembly 184 that assembly can then move another uncut blank into the machine and lower it onto tongue 30. With the vacuum pick-up assembly 184 back in its horizontal infeed position, it will be held at that position, at least momentarily, while clamp head 182, and specifically the vacuum assembly 206, lowers the cut blank onto the top of the vacuum pick-up assembly 184. Vacuum will be removed from vacuum cups 208 and vacuum assembly 206 will be indexed upwardly back into the frame of clamp head 182. Thereafter, vacuum pick-up assembly 184 can retract horizontally out of the machine where the cut blank can be unloaded.

The system is appropriately powered by a conventional power source which will supply suitable power to electrical equipment and motors needed to drive or power the various mechanical, vacuum and hydraulic system components. We prefer to employ conventional input/output circuit board connection techniques with push-button or other control functions being connected to the system through either portable or stationary panels.

Likewise, suitable switching techniques are employed, including the use of microswitches to provide electrical inputs of system operation, from which control logic information can be generated. Electrical outputs can in turn be generated to drive relays, solenoids or other remotely operable devices or valves used throughout the system to provide control capability. Further, electric eyes and limit switches can also be used to provide input control signals generated by movement of either blanks, scrap pieces or system components.

These control functions serve to control each phase of the process as well as the operating sequencing of the system components themselves including the actuation or deactuation of hydraulic pump motors 110 and 140 as well as motor 220, vacuum pick up assembly 184, side and end cutting assemblies 16 and 150, respectively, frame 191, clamp head 182, ejection assembly 22, jack screws 72, safety locks 224, clamps 60 and 64, vacuum assembly 206, side cutting assembly 16, adjusting assembly 20, and the load-unload assemblies 24.

Cutting moldings or extrusions by the present method requires that the material being cut be sufficiently compressible that the cutting blades may make spaces for themselves under low enough lateral normal forces that the blade material can withstand, without breakage, the frictional forces imposed on the moving blades by the normal forces. Although our present experience includes cutting impact grade polypropylene moldings made of Rexene 18W4 and 17S2, and Uniroyal high-impact grade acrylonitryl-butadiene-styrene resin, many other materials have properties which would allow them to be cut using the present invention.

Claims:-

1. Apparatus for trimming and sizing the walls of plastic blanks for containers, the apparatus comprising a support (14) for supporting the blank (50) being trimmed, first cutting means (16) for traversing past at least one wall (52) and cutting through the thickness of said at least one wall (52), second cutting means (18) for traversing past at least one other wall (56) normal to said at least one wall (52) and cutting through the thickness of said other wall (56), drive means (140, 110 respectively) for driving said first and second cutting means, and control means (26) for controlling the cutting sequence of said first and second cutting means (16, 18).

2. Apparatus according to claim 1 wherein the support (14) includes a support tongue (30) having an outer shape complementary to the interior shape of the blank (50) and comprising an end wall (38), first and second side walls (34, 36) and a top wall (32) with the end wall (38) and side walls (34, 36) having grooves (40).

3. Apparatus according to claim 1 wherein each of said first and second cutting means (16, 18) includes two cutting blades (104, 106: 154, 156) positioned in the same plane, one of said cutting blades (104: 154) extending outwardly from said cutting means a first predetermined distance so that it forms a cut line, along the wall being cut, having a depth equal to only part of the wall thickness, the other of said cutting blades (106: 156) extending outwardly from said cutting means a second predetermined distance so that it follows in the cut line produced by said one cutting blade and completes the cutting of the wall.

4.  Apparatus according to claim 3 wherein said one cutting blade (104: 154) cuts less than half the thickness of the wall being cut.

5.  Apparatus according to claim 4 wherein said one cutting blade (104: 154) forms a cut having a depth of about 25 percent to about 60 percent of the thickness of the wall being cut.

6.  Apparatus according to any one of the preceding claims wherein said first cutting means (16) includes two cutting units (90, 92) positioned on opposite sides of said support (14).

7.  Apparatus according to any one of the preceding claims wherein, said support (14) has at least one end and side, said first cutting means (16) is positioned to cut along the side of said support, and said second cutting means (18) is positioned to cut across the end of said support.

8.  Apparatus according to any one of the preceding claims and further including an infeed loader (180) for feeding uncut blanks (50) into said apparatus, and means (184) for depositing the uncut blanks on said support (14) and removing the cut blanks (50) from said support (14) to an unloading station (190).

9.  Apparatus according to any of the preceding claims wherein said first and second cutting means (16, 18) each comprise holding means (96: 152) for holding at least first and second cutting blades (104, 106: 154, 156), said first blade extending outwardly from said holding means a first predetermined distance, said second blade extending outwardly from said holding means a first predetermined distance, said second blade extending outwardly from said holding means a second and greater predetermined distance, said first and second blades being in the same plane so that

21

said first blade cuts into the material to a depth extending part way through the material while said second blade moves within the cut made by said first blade and cuts through the material.

10. A method for trimming the walls of container blanks to a predetermined size on trimming apparatus comprised of the steps of: gripping an uncut blank (50) and feeding that uncut blank into the trimming apparatus; depositing the uncut blank on a fixed support (14) within the trimming apparatus; clamping the uncut blank and trimming the uncut blank to a predetermined size; unclamping and unloading the cut blank from the apparatus; ejecting the scrap portion; and returning the apparatus to its initial start position.

**F I G. 1**

F I G. 2

0061185

FIG.3

FIG. 5

FIG. 4

## BLANK CUTTER FLOW DIAGRAM

INFEED LOADER            CUTTER

FIG. 6